# EUROPÄISCHE PATENTANMELDUNG

(11) **EP 4 299 485 A1**
(43) Veröffentlichungstag der Anmeldung: **03.01.2024**
(21) Anmeldenummer: 23182579.5
(22) Anmeldetag: 30.06.2023
(51) Int. Cl.: B65G 43/08, B65G 47/244, B65G 13/06, B65G 47/46

(54) **VORRICHTUNG ZUM AUSRICHTEN BZW. ROTIEREN VON OBJEKTEN**

(30) Priorität: 01.07.2022 DE 102022116481
(71) Anmelder: Deutsche Post AG, 53113 Bonn (DE)
(72) Erfinder: Kuznecov, Viktor, 53721 Siegburg (DE)
(74) Vertreter: dompatent von Kreisler Selting Werner - Partnerschaft von Patent- und Rechtsanwälten mbB

(57) **Zusammenfassung**

Vorrichtung zum Ausrichten von Objekten, mit einer Fördervorrichtung, wobei die Fördervorrichtung einen Einlass zur Aufnahme der Objekte und einen Auslass aufweist und ausgebildet ist die Objekte in eine Förderrichtung zu befördern. Dabei weist die Fördervorrichtung eine Ausrichtungsvorrichtung auf, welche sich zumindest teilweise entlang der Förderrichtung erstreckt. Die Ausrichtungsvorrichtung weist einen ersten Abschnitt und einen zweiten Abschnitt auf, wobei der erste Abschnitt und der zweite Abschnitt entlang der Förderrichtung nebeneinander angeordnet sind, wobei mindestens einer von dem ersten Abschnitt und dem zweiten Abschnitt als Rollenförderer ausgebildet ist und wobei durch den ersten Abschnitt und den zweiten Abschnitt eine unterschiedliche Beschleunigung/Bremswirkung der Objekte erfolgt zur Ausrichtung.

## Beschreibung

Die vorliegende Erfindung betrifft eine Vorrichtung zum Befördern von Objekten wie beispielsweise Packstücke, Pakete, Stückgut oder Sendungen. Insbesondere betrifft die vorliegende Erfindung eine Vorrichtung, welche Teil eines Sorters zur Sortierung der Objekte sein kann.

Mit der steigenden Anzahl von Sendungen und zu transportierenden Gütern in der Logistik steigt auch die Anforderung an deren Sortierung. Üblicherweise erfolgt die Sortierung der Objekte in sogenannten Sortern. Hierbei werden die Objekte sortiert und einzelnen sogenannten Endstellen zugeordnet. Hierbei kann sodann für die Objekte einer jeweiligen Endstelle ein Weitertransport, eine Umverladung oder eine erneute Sortierung erfolgen. Um jedoch bei steigender Anzahl zu transportierenden Objekten die Granularität der Sortierung zu erhöhen, kann es erforderlich sein ebenfalls die Anzahl der Endstellen zu erhöhen. Dies erfordert jedoch einen vergrößerten Platzbedarf. Gleichzeitig können die Dimensionen dieser Endstellen nicht beliebig klein gewählt werden, da sich die Dimension der Endstellen an der Größe der Objekte orientiert.

Insbesondere bei der Sortierung von Packstücken tritt hinzu, dass die einzelnen Packstücke sehr unterschiedlich ausgebildet sein können und somit beispielsweise ein Gewicht zwischen 10g und 32 kg aufweisen können. Auch die Form und Größe variiert in einem großen Bereich beispielsweise zwischen 5 x 5 x 0,5 cm bis 60 x 60 x 120 cm. Neben den üblichen quaderförmigen Packstücken, welche meist aus Wellpappe bestehen, werden mehr und mehr auch Packtüten als Umverpackung der Packstücke herangezogen, wodurch sich eine weitere Variabilität in dem Transportverhalten der Packstücke ergibt.

Gleichzeitig soll in einem Sorter die Bewegungsgeschwindigkeit der Packstücke möglichst hoch gewählt werden, um einen möglichst hohen Durchsatz an Packstücken zu erzielen. Dies führt jedoch insbesondere für schwere Packstücke zu weiteren Problemen, da für diese ein effektives Abbremsen erfolgen muss, um Stöße zu vermeiden, welche die schweren Packstücke beschädigen könnten.

Dahingegen können oder müssen leichte Packstücke und insbesondere Packtüten aktiv gefördert werden, da diese unter Umständen sogar zu leicht sind, um auf Grund ihrer Gewichtskraft beispielsweise über Rollenbahnen gleiten zu können.

Bei üblichen Sortern werden zur Sortierung der Objekte diese entlang einer ersten Förderrichtung auf einer ersten Fördervorrichtung transportiert und sodann von dieser ersten Fördervorrichtung in einzelne Endstellen abgeworfen. Hierbei besteht das Risiko, dass beim Abwerfen der Objekte in die jeweiligen Endstelle sich die Objekte verkanten und stecken bleiben. Hierdurch werden die jeweiligen Endstellen blockiert. Dies erfordert ein manuelles Eingreifen in die Endstellen, was die Sortiereffizienz des Sorters reduziert und unter Umständen eine Gefährdung des Bedienpersonals bedeutet, da dieser manuelle Eingriff üblicherweise im laufenden Betrieb erfolgt. Die Wahrscheinlichkeit des Verkantens beim Übergang von der ersten Fördervorrichtung und der zweiten Fördervorrichtung wird noch erhöht, werden die als Endstelle ausgebildeten zweiten Fördervorrichtungen schmal ausgebildet, um eine erhöhte Zahl dieser Endstellen vorzusehen.

Aufgabe der vorliegenden Erfindung ist es somit, eine Vorrichtung zum Befördern von Objekten zu schaffen, bei der ein Verkanten / Verklemmen der Objekte verhindert wird und die kompakt ausgebildet sein kann.

Die Aufgabe wird gelöst durch eine Vorrichtung gemäß Anspruch 1 sowie einen Sorter gemäß Anspruch 12.

Die erfindungsgemäße Vorrichtung zum Ausrichten bzw. Rotieren von Objekten weist eine Fördervorrichtung auf, wobei die Fördervorrichtung einen Einlass zur Aufnahme der Objekte und einen Auslass aufweist und ausgebildet ist die Objekte in eine Förderrichtung zu befördern. Hierbei kann es sich bei den Objekten beispielsweise um Packstücke, Pakete, Stückgut, Sendungen oder dergleichen handeln. Die Erfindung ist nicht auf eine bestimmte Art der Objekte beschränkt.

Weiterhin weist die erfindungsgemäße Fördervorrichtung eine Ausrichtungsvorrichtung auf, welche sich zumindest teilweise entlang der Förderrichtung erstreckt. Dabei weist die Ausrichtungsvorrichtung einen ersten Abschnitt und einen zweiten Abschnitt auf, wobei der erste Abschnitt und der zweite Abschnitt entlang der Förderrichtung nebeneinander angeordnet sind. Mit anderen Worten sind der erste Abschnitt und der zweite Abschnitt in einer Richtung senkrecht zur Förderrichtung hintereinander angeordnet. Dabei ist mindestens einer von dem ersten Abschnitt und dem zweiten Abschnitt ausgebildet als Rollenförderer und weist somit insbesondere eine Vielzahl von Förderelementen auf, wie beispielsweise Rollen (ausgebildet als Rollenbahn), Kugeln (ausgebildet beispielsweise als Röllchenförderer), Walzen oder dergleichen. Weiterhin sind der erste Abschnitt und der zweite Abschnitt ausgebildet, um eine unterschiedliche Beschleunigung bzw. Bremswirkung auf die Objekte zu übertragen zur Ausrichtung der Objekte. Somit wird der Teil des Objekts, welcher über den ersten Abschnitt befördert wird, anders abgebremst bzw. beschleunigt als der Teil desselben Objekts, welcher über dem mindestens zweiten Abschnitt befördert wird. Hierdurch erfolgt eine Rotation des Objekts zur Ausrichtung. Durch die Ausrichtungsvorrichtung werden somit die Objekte ausgerichtet bzw. rotiert. Weisen die Objekte beispielsweise eine Breite auf, die kleiner ist als eine Länge der Objekte, kann durch die Ausrichtungsvorrichtung sichergestellt werden, dass das Objekt so gedreht wird, dass die Breite senkrecht zur Förderrichtung ausgerichtet wird. Hierdurch kann die Breite der Fördervorrichtung, welche sich nach der maximalen Breite der zu befördernden Objekte richtet, reduziert werden, sodass der Platzbedarf der Fördervorrichtung reduziert werden kann. Gleichzeitig wird durch das Ausrichten sichergestellt, dass bei dem Übergang des Objekts in die Fördervorrichtung ein Verkanten des Objekts verhindert wird. Somit wird durch die Ausrichtungsvorrichtung in der Fördervorrichtung ein Verkanten verhindert, wodurch manuelle Eingriffe in den Sorter reduziert werden können.

Vorzugsweise wird durch den ersten Abschnitt und den zweiten Abschnitt eine ebene und insbesondere gemeinsame Förderfläche gebildet. Hierzu sind insbesondere der erste Abschnitt und der zweite Abschnitt auf derselben Höhe und ohne Höhenversatz angeordnet. Somit kann ein Objekt, welches über den ersten Abschnitt und den zweiten Abschnitt bewegt wird, möglichst vollflächig in Kontakt kommen mit dem ersten Abschnitt und/oder dem zweiten Abschnitt, so dass die entsprechende Beschleunigung bzw. Bremswirkung des jeweiligen Abschnitts effektiv auf das Objekt übertragen werden.

Vorzugsweise wird das Objekt zur Ausrichtung über den ersten Abschnitt und gleichzeitig über den zweiten Abschnitt bewegt und kommt mit diesen in Kontakt, so dass ein Teil des Objekts die Beschleunigung bzw. Bremswirkung des ersten Abschnitts erfährt und ein anderer Teil des Objekts die Beschleunigung bzw. Bremswirkung des zweiten Abschnitts erfährt. Hierdurch werden unterschiedliche Teile des Objekts unterschiedlich beschleunigt/gebremst, was zu einer Rotation und Ausrichtung des Objektes führt.

Vorzugsweise erfolgt die Bremswirkung bzw. die Beschleunigung des ersten Abschnitts und/oder des zweiten Abschnitts in Bewegungsrichtung/Förderrichtung der Fördervorrichtung und insbesondere nicht in Bewegungsrichtung/Förderrichtung einer Hauptfördervorrichtung des Sorters. Somit kommt es bei einer Ausbildung der Fördervorrichtung als Rutsche zu einer Überlagerung der gravitativen Bewegung entlang der Rutsche und der Bremswirkung bzw. Beschleunigung des ersten Abschnitts und/oder des zweiten Abschnitts zur Ausrichtung bzw. Rotation des Objekts.

Vorzugsweise weisen die Objekte ein Gewicht auf zwischen 10 g und 32 kg. Alternativ oder zusätzlich hierzu weisen die Objekte eine maximale Breite von bis zu 600 mm und/oder eine maximale Länge von bis zu 1200 mm auf. Dabei wird hier und im Folgenden die kleinere dieser Dimension als Breite bezeichnet und die größere dieser Dimension als Länge, sodass die Länge eines Objekts stets gleich oder größer ist als die Breite des Objekts.

Vorzugsweise ist die Ausrichtungsvorrichtung ausgebildet, Objekte mit unterschiedlichem Gewicht und/oder unterschiedlichen Abmessungen auszurichten.

Vorzugsweise ist am Einlass die Länge des Objekts im Wesentlichen senkrecht zur Förderrichtung ausgerichtet bzw. die Breite des Objekts entlang der Förderrichtung ausgerichtet, wobei die Ausrichtungsvorrichtung derart ausgebildet ist, das Objekt auszurichten, sodass nach der Ausrichtungsvorrichtung die Länge des Objektes entlang der Förderrichtung ausgerichtet ist.

Vorzugsweise beträgt die Breite der Fördervorrichtung weniger als 1000 mm, vorzugsweise weniger als 800 mm und besonders bevorzugt weniger als 650 mm. Alternativ oder zusätzlich hierzu beträgt die Breite der Fördervorrichtung weniger als die maximale Länge der Objekte. Dabei bezeichnet die Breite der Fördervorrichtung die Dimension der Fördervorrichtung senkrecht zur zweiten Förderrichtung. Hierbei kann es sich insbesondere um die minimale Breite der zweiten Fördervorrichtung handeln. So kann die Fördervorrichtung eine sich ändernde Breite aufweisen, welche sich beispielsweise ausgehend vom Einlass reduziert, um einen optimalen Übergang der Objekte in die Fördervorrichtung zu gewährleisten.

Vorzugsweise kann eine Grenzlinie zwischen dem ersten Abschnitt und dem zweiten Abschnitt entlang der Förderrichtung angeordnet sein. Alternativ kann sich die Grenzline von der Förderrichtung unterscheiden, sodass sich der erste Abschnitt und/oder der zweite Abschnitt entlang der Förderrichtung ändert.

Vorzugsweise sind der erste Abschnitt und der zweite Abschnitt gleich breit oder unterschiedlich breit (also in einer Dimension der Abschnitte) und insbesondere gleich groß oder unterschiedlich groß (also bzgl. ihrer Fläche).

Vorzugsweise ist die Ausrichtungsvorrichtung angeordnet unmittelbar am Einlass der zweiten Fördervorrichtung. Alternativ hierzu ist die Ausrichtungsvorrichtung innerhalb der Fördervorrichtung oder an deren Ende angeordnet.

Vorzugsweise ist die Ausrichtungsvorrichtung ausgebildet, die Objekte auszurichten während einer kontinuierlichen Bewegung der Objekte in Förderrichtung. Insbesondere erfolgt kein Abbremsen der Objekte bis zum Stillstand durch die Ausrichtungsvorrichtung. Hierdurch kann eine besonders schnelle Ausrichtung der Objekte erfolgen und somit ein hoher Durchsatz an Objekten auf der erfindungsgemäßen Vorrichtung erreicht werden. Dies wird insbesondere dadurch erreicht, dass der erste Abschnitt und/oder der zweite Abschnitt als Rollenförderer ausgebildet sind und somit während der Ausrichtung weiterhin eine Bewegung der Objekte in Förderrichtung erfolgt.

Vorzugweise weist der Rollenförderer einen Antrieb auf zur Erzeugung der Beschleunigung bzw. Bremswirkung. Hierzu kann der Antrieb gekoppelt sein mit den Förderelementen der Rollenbahn und diese in Rotation versetzen. Insbesondere kann die Fördergeschwindigkeit der Rollenbahn durch den Antrieb angepasst werden. Dabei kann lediglich ein Förderelement der Rollenbahn, mehrere Förderelemente der Rollenbahn oder alle Förderelemente der Rollenbahn mit dem Antrieb gekoppelt sein. Weiterhin kann ein einzelner Antrieb vorgesehen sein, welcher alle Förderelemente der Rollenbahn gemeinsam antreibt und somit eine gleichschnelle Rotation der Förderelemente erzeugt. Alternativ hierzu weist mindestens ein Förderelement des Rollenförerers einen eigenen Antrieb auf, sodass die Drehgeschwindigkeit der Förderelemente des Rollenförderers unabhängig voneinander gewählt werden können. So können beispielsweise mit einem ersten Antrieb Förderelemente näher am Einlass der Fördervorrichtung schneller bewegt werden als Förderelemente näher am Auslass der Fördervorrichtung durch einen zweiten Antrieb, sodass entlang der Fördervorrichtung eine Reduzierung der Geschwindigkeit der Objekte erreicht werden kann. Selbstverständlich ist dies lediglich exemplarisch zu verstehen, sodass die Situation auch gerade umgekehrt werden kann.

Vorzugsweise weist der Rollenförderer eine Bremsvorrichtung auf zum Bremsen der Rotation der Förderelemente des Rollenförderers. Dabei wird mittels der Bremsvorrichtung der Rollwiderstand der Rollbahn verändert zur Erzeugung der Bremswirkung. Insbesondere wenn die Förderelemente des Rollenförderers allein durch die Bewegung der Objekte in Drehung versetzt werden, können die Förderelemente sodann mittels der Bremsvorrichtung gebremst werden. Vorzugsweise kann die Bremsvorrichtung statisch ausgebildet sein, d. h. Eigenschaften der Förderelemente oder des Rollenförderers können derart gewählt werden, dass dauerhaft ein erhöhter Rollwiderstand des Rollenförderers vorliegt. Dies kann beispielsweise erreicht werden durch Erhöhung der Gewichte der Förderelemente des Rollenförderers, Flüssigkeitsfüllung der Rollen oder durch ein Reibungselement, welches die Rotation der Förderelemente abbremst und hierdurch den Rollwiderstand des Rollförderers erzeugt. Alternativ hierzu handelt es sich bei der Bremsvorrichtung um eine dynamisch einstellbare Bremsvorrichtung, welche veränderbar ist. Hierzu kann beispielsweise ein Bremselement vorgesehen werden, welches insbesondere ausgebildet sein kann als Wirbelstrombremse, Fluidbremse oder als veränderbares Reibungselement. Dabei kann die Bremswirkung des Bremselements verändert werden für einzelne Objekte oder an die jeweilige Anwendung bzw. die zu erwartenden Objekte angepasst werden.

Vorzugsweise ist die Ausrichtungsvorrichtung ausgebildet, die Beschleunigung bzw. Bremswirkung des ersten Abschnitts und/oder des zweiten Abschnitts in Abhängigkeit von einem oder mehreren von der Größe des Objekts von der Geschwindigkeit des Objekts insbesondere am Einlass der Fördervorrichtung und dem Gewicht des Objekts anzupassen. Somit kann die Ausrichtungsvorrichtung derart angesteuert werden, dass die Ausrichtung in Abhängigkeit von dem Gewicht, der Größe und/oder der Geschwindigkeit des Objekts angesteuert werden, um somit eine optimale Ausrichtung der Objekte zu gewährleisten.

Vorzugsweise sind der erste Abschnitt und der zweite Abschnitt als Rollenförderer ausgebildet. Somit sind der erste Abschnitt und der zweite Abschnitt als unabhängige Rollenförderer ausgeführt, welche Förderelemente aufweisen, die sich unabhängig voneinander bewegen lassen und eine unterschiedliche Beschleunigung bzw. Bremswirkung auf die Objekte übertragen zur Ausrichtung der Objekte.

Vorzugsweise ist der jeweils andere Abschnitt ausgebildet als Gleitfläche, Aerofläche (auch bezeichnet als Vakuumfläche, Luftblech/-platte oder dergleichen) oder Förderband. Ist somit der erste Abschnitt ausgebildet als Rollenförderer, kann der zweite Abschnitt ausgebildet sein als Gleitfläche, Aerofläche oder Förderband. Ist hingegen jedoch der zweite Abschnitt ausgebildet als Rollenförderer, kann der erste Abschnitt ausgebildet sein als Gleitfläche, Aerofläche oder Förderband.

Vorzugsweise ist der erste Abschnitt oder zweite Abschnitt gebildet als Förderband oder Bandförderer. Hierbei kann die Bewegungsgeschwindigkeit des Förderbands im ersten Abschnitt bzw. im zweiten Abschnitt entsprechend gewählt werden. Insbesondere kann die Förderrichtung des Förderbands im ersten Abschnitt oder im zweiten Abschnitt entgegen der Förderrichtung gewählt werden, um hierdurch ein Abbremsen zu erzeugen. Insbesondere für den Fall, dass die Fördervorrichtung ausgebildet ist als Rutsche, kann beispielsweise die Bewegung des Objekts im Wesentlichen durch die Gravitationskraft erfolgen, wodurch das Förderband lediglich dazu vorgesehen ist, eine entsprechende Ausrichtung des Objekts zu gewährleisten.

Vorzugsweise ist der erste Abschnitt oder der zweite Abschnitt gebildet als Gleitfläche. Hierbei handelt es sich um eine passive Ausrichtungsvorrichtung, welche keine Aktivierung benötigt und somit besonderes einfach und kostengünstig ausgebaut ist. Hierzu kann der Reibungswiderstand des ersten Abschnitts oder des zweiten Abschnitts derart gewählt werden, dass eine unterschiedliche Bremswirkung aufgrund der Reibung des Objekts mit der Gleitfläche des ersten Abschnitts oder des zweiten Abschnitts erzeugt wird zur Ausrichtung des Objekts.

Vorzugsweise ist der erste Abschnitt oder der zweite Abschnitt gebildet als Aerofläche, wobei die Aerofläche eine Vielzahl von Öffnungen aufweist, wobei die Öffnung mit einem Überdruck aufschlagbar sind zur Erzeugung eines Luftkissens unter einem Objekt oder mit einem Unterdruck beaufschlagbar sind zum Anpressen/Ansaugen des Objekts auf die Aerofläche. Bei der Erzeugung eines Luftkissens unter dem Objekt wird somit der Reibungswiderstand des Objekts über die Aerofläche reduziert, wodurch die Bremswirkung aufgrund der Reibung mit der Aerofläche reduziert wird. Dahingegen wird das Objekt an die Aerofläche angesaugt beim Anlegen eines Unterdrucks an die Öffnungen der Aerofläche, wodurch die Reibung zwischen dem Objekt und der Aerofläche erhöht wird zur Erhöhung der Bremswirkung. Somit kann durch gezieltes Ansteuern des ersten Abschnitts bzw. des zweiten Abschnitts die Rutscheigenschaften der Objekte angepasst werden und eine gezielte Ausrichtung erreicht werden.

Vorzugsweise handelt es sich bei der Fördervorrichtung um eine Rutsche. Hierbei ist die Fördervorrichtung geneigt gegenüber der Horizontalen, sodass eine Bewegung der Objekte in Richtung der Förderrichtung im Wesentlichen durch deren Gewichtskraft erfolgt bzw. sich ergibt aus einer Anfangsgeschwindigkeit beispielsweise auf Grund einer Abwurfgeschwindigkeit des Objekts in die Vorrichtung durch einen Sorter. Dies ist jedoch nicht zwingend beschränkt auf eine gleitende Bewegung, sondern umfasst ebenfalls andere Formen, bei denen eine Bewegung der Objekte auf Grund ihrer Gewichtskraft ermöglicht wird, wie beispielsweise Rollenförderer oder dergleichen.

Vorzugsweise weist das Objekt am Einlass der Fördervorrichtung ein Bewegungskomponente auf, welche im Wesentlichen senkrecht zu der Förderrichtung der Fördervorrichtung ist. In der Anwendung werden somit die Objekte in die Vorrichtung der vorliegenden Erfindung abgelenkt bzw. abgeworfen und tragen somit eine Bewegungskomponente, welche nicht mit der Förderrichtung der Fördervorrichtung übereinstimmt. Dabei ist der erste Abschnitt höherer Beschleunigung bzw. geringerer Bremswirkung entlang dieser Bewegungskomponente hinter dem zweiten Abschnitt angeordnet. Dabei gilt für das Verhältnis der Bremswirkungen bzw. Beschleunigung des ersten Abschnitts und des zweiten Abschnitts eines des Folgenden:
- der erste Abschnitt weist eine erste Bremswirkung auf und der zweite Abschnitt weist eine zweite Beschleunigung auf;
- der erste Abschnitt weist eine erste Beschleunigung auf und die zweiten Abschnitte weist eine zweite Beschleunigung auf, wobei die erste Beschleunigung größer ist als die zweite Beschleunigung; oder
- der erste Abschnitt weist eine erste Bremswirkung und der zweite Abschnitt weist eine zweite Bremswirkung auf, wobei die erste Bremswirkung kleiner ist als die zweite Bremswirkung.

Somit erfolgt durch den ersten Abschnitt und den zweiten Abschnitt der Ausrichtungsvorrichtung stets ein Eindrehen der Objekte beim Einlass in die Fördervorrichtung. Dabei kann gleichzeitig eine Beschleunigung oder Abbremsung des Objektes bzw. unterschiedlichen Teilen der Objekte erfolgen. Die Ausrichtung kann ein Verkanten des Objekts beim Übergang in die Fördervorrichtung verhindern. Gleichzeitig kann das Objekt derart ausgerichtet werden, dass dieses mit seiner Breite in Breitenrichtung der Fördervorrichtung ausgerichtet wird und somit die erforderliche Breite der Fördervorrichtung reduziert werden kann.

Vorzugsweise weist die Ausrichtungsvorrichtung eine Vielzahl nebeneinander angeordnete Abschnitte auf, wobei mindestens zwei dieser Abschnitte ausgebildet sind als erster Abschnitt und zweiter Abschnitt wie vorstehend beschrieben.

Weiterhin betrifft die vorliegende Erfindung einen Sorter zum Sortieren von Objekten, wobei es sich bei den Objekten insbesondere um Packstücke, Pakete, Stückgut oder Sendungen handelt. Bei einem solchen Sorter handelt es sich um ein Logistiksortier- und Verteilsystem. Dabei weist der Sorter eine erste Fördervorrichtung und mindestens eine zweite Fördervorrichtung auf, wobei die zweite Fördervorrichtung von der ersten Fördervorrichtung abzweigt. Dabei kann die zweite Fördervorrichtung ausgebildet sein als Endstelle des Sorters. Dabei ist die zweite Fördervorrichtung ausgebildet gemäß der vorstehend beschriebenen Vorrichtung. Insbesondere befördert die erste Fördervorrichtung die Objekte in eine erste Förderrichtung und die zweite Fördervorrichtung befördert die Objekte in eine zweite Förderrichtung, wobei die erste Förderrichtung verschieden ist von der zweiten Förderrichtung. Insbesondere ist der erste Abschnitt in Richtung der ersten Förderrichtung hinter dem zweiten Abschnitt angeordnet.

Vorzugsweise ist die zweite Fördervorrichtung im Wesentlichen senkrecht oder geneigt zur ersten Fördervorrichtung angeordnet. Hierdurch ist ebenfalls die zweite Förderrichtung im Wesentlichen senkrecht zur ersten Förderrichtung oder entsprechend geneigt. Insbesondere wenn die zweite Fördervorrichtung geneigt zur ersten Fördervorrichtung angeordnet ist, beträgt der eingeschlossene Winkel zwischen der ersten Förderrichtung und der zweiten Förderrichtung 90° oder weniger, wobei weiterhin die erste Förderrichtung verschieden ist von der zweiten Förderrichtung.

Vorzugsweise weist der Sorter eine Vielzahl von zweiten Fördervorrichtungen auf, welche auf einer Seite oder auf beiden Seiten von der ersten Fördervorrichtung abzweigen. Dabei können die zweiten Fördervorrichtungen ausgebildet sein als Endstellen des Sorters. Dabei können die zweiten Fördervorrichtungen gleich oder unterschiedlich ausgebildet sein. Insbesondere weist der Sorter mehr als eine zweite Fördervorrichtung auf, welche gemäß der vorstehend beschriebenen Vorrichtung ausgebildet ist. Bevorzugt sind alle zweiten Fördervorrichtungen des Sorters ausgebildet gemäß der vorstehend beschriebenen Vorrichtung.

Nachfolgend wird die Erfindung anhand bevorzugter Ausführungsformen unter Bezugnahme auf die beigefügten Zeichnungen näher erläutert.

Es zeigen:
- Figur 1: eine schematische Darstellung der vorliegenden Erfindung,
- Figur 2: eine Ausführungsform der vorliegenden Erfindung,
- Figur 3: eine weitere Ausführungsform der vorliegenden Erfindung,
- Figur 4: eine weitere Ausführungsform der vorliegenden Erfindung,
- Figur 5: eine weitere Ausführungsform der vorliegenden Erfindung,
- Figur 6: eine weitere Ausführungsform der vorliegenden Erfindung,
- Figur 7: eine weitere Ausführungsform der vorliegenden Erfindung,
- Figur 8: eine weitere Ausführungsform der vorliegenden Erfindung, und
- Figur 9: eine weitere Ausführungsform der vorliegenden Erfindung.

Die erfindungsgemäße Vorrichtung 10 weist eine erste Fördervorrichtung 12 auf, welche ein Objekt 16 entlang einer ersten Förderrichtung 14 befördert. Bei dem Objekt 16 kann es sich beispielsweise um ein Packstücke, Paket, Stückgut oder dergleichen handeln. Vorzugsweise handelt es sich bei der ersten Fördervorrichtung 12 um ein Förderband oder Kippschalenförderer.

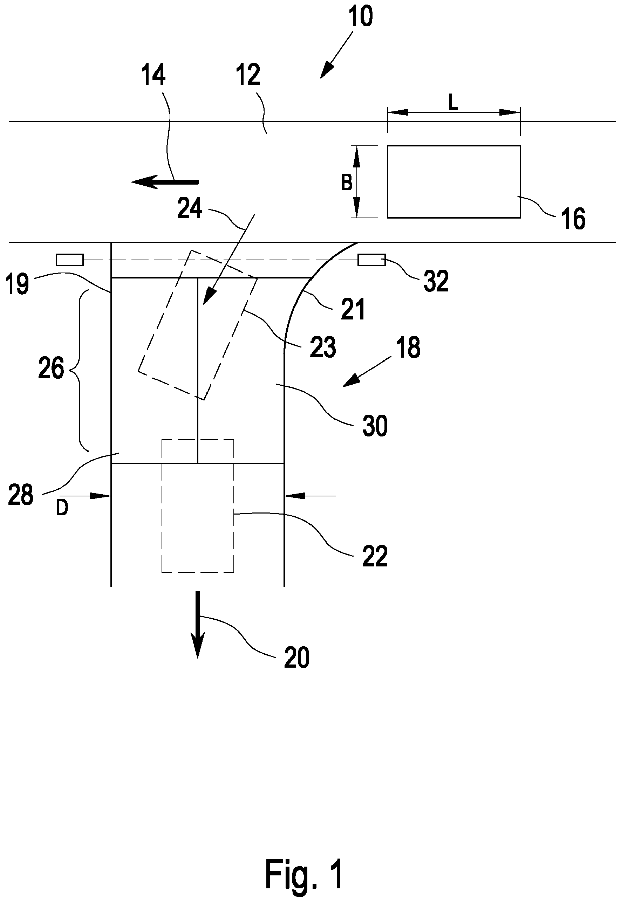

Das Objekt 16 im Beispiel der Figur 1 weist eine Breite B und eine Länge L auf. Da ist das Objekt 16 in dem Beispiel der Figur 1 mit seiner Länge L entlang der ersten Förderrichtung 14 ausgerichtet. Alternativ kann das Objekt 16 auf der ersten Fördervorrichtung 12 mit seiner Breite B entlang der ersten Förderrichtung 14 ausgerichtet sein.

Weiterhin weist die Vorrichtung 10 mindestens eine zweite Fördervorrichtung 18 auf. Die zweite Fördervorrichtung 18 zweigt von der ersten Fördervorrichtung 12 ab. Im Beispiel der Figur 1 zweigt die zweite Fördervorrichtung 18 im Wesentlich senkrecht von der ersten Fördervorrichtung 12 ab. Andere Winkel zwischen der ersten Fördervorrichtung 12 und der zweiten Fördervorrichtung 18 sind ebenfalls möglich. Weiterhin ist in dem Beispiel der Figur 1 lediglich eine zweite Fördervorrichtung 18 gezeigt. Jedoch kann die Vorrichtung 10 eine Vielzahl zweiter Fördervorrichtungen 18 aufweisen, welche entlang der ersten Förderrichtung 14 auf einer oder beiden Seiten der ersten Fördervorrichtung 12 abzweigen. Dabei ist die Anzahl der zweiten Fördervorrichtungen begrenzt durch deren Breite und insbesondere deren maximale Breite D, welche im Beispiel der Figur 1 unmittelbar am Eingang bzw. dem Übergang von der ersten Fördervorrichtung 12 zur zweiten Fördervorrichtung 18 vorliegt. Dabei kann die zweite Fördervorrichtung 18 einen sich verengenden Abschnitt 21 aufweisen, welcher eine Führung von abgeworfenen Objekten bereitstellt. Die zweite Fördervorrichtung 18 ist dabei ausgebildet ein Objekt 22 in eine zweite Förderrichtung 20 zu befördern. Das Objekt 16, welches durch die erste Fördervorrichtung befördert wird, kann beispielsweise in die zweite Fördervorrichtung 18 abgeworfen werden und sodann durch die zweite Fördervorrichtung 18 transportiert werden. Insbesondere handelt es sich bei der zweiten Fördervorrichtung um eine Rutsche, sodass das Objekt 16, welches in die zweite Fördervorrichtung 18 abgeworfen wird im Wesentlichen durch seine Gewichtskraft entlang der zweiten Fördervorrichtung 18 bewegt. Eine zusätzliche Bewegungskomponente kann vorliegen durch die Abwurfgeschwindigkeit des Objekts von der ersten Fördervorrichtung auf die zweite Fördervorrichtung.

Dabei können die Objekte 16 sehr unterschiedlich sein und weisen beispielsweise ein Gewicht auf zwischen 10 g und 32 kg. Alternativ oder zusätzlich hierzu können die Objekte 16 eine maximale Breite von bis zu 600 mm und/oder eine maximale Länge von bis zu 1200 mm aufweisen. Dabei ist insbesondere die Ausrichtungsvorrichtung 26 ausgebildet Objekte 16 mit unterschiedlichem Gewicht und/oder unterschiedlichen Abmessungen und unterschiedlichen Ausgangspositionen/-ausrichtungen auf der ersten Fördervorrichtung auszurichten.

Insbesondere wenn die zweite Fördervorrichtung 18 im Wesentlichen senkrecht abzweigt von der ersten Fördervorrichtung 12 kann sich das Objekt 16 aufgrund seiner Dimensionen beim Übergang von der ersten Fördervorrichtung 12 zur zweiten Fördervorrichtung 18 verkanten. Dies gilt, insbesondere sofern die Länge L des Objekts 16 größer ist als die Breite D der zweiten Fördervorrichtung. Insbesondere beträgt die Breite D der zweiten Fördervorrichtung 18 weniger als 1000 mm, vorzugsweise weniger als 800 mm und besonders bevorzugt weniger als 650 mm. Alternativ oder zusätzlich hierzu beträgt die Breite D der zweiten Fördervorrichtung 18 weniger als die maximale Länge L der Objekte 16.

Zur Ausrichtung bzw. Rotation der Objekte 16 weist die zweite Fördervorrichtung 18 eine Ausrichtungsvorrichtung 26 auf. Wird das Objekt 16 von der ersten Fördervorrichtung 12 in die zweite Fördervorrichtung 18 abgeworfen, erfolgt ein Ausrichten bzw. Rotieren des Objekts 16 gemäß dem Pfeil 24 durch die Ausrichtungsvorrichtung 26. Dies ist in Figur 1 dargestellt durch das rotierte Objekt 23, welches in die zweite Fördervorrichtung 18 hineinrotiert wird. Da die Breite B des Objekts 16 kleiner ist als die Länge L, kann durch die geeignete Ausrichtung des Objekts beim Übergang von der ersten Fördervorrichtung 12 in die zweite Fördervorrichtung 18 das Objekt derart ausgerichtet werden, dass die Breite B senkrecht zur zweiten Förderrichtung 20 liegt. Hierdurch kann der erforderliche Platzbedarf der zweiten Fördervorrichtungen 18 reduziert werden und gleichzeitig, durch die optimierte Ausrichtung der Objekte 16 durch die Ausrichtungsvorrichtung 26, ein Verkanten der Objekte und somit ein Blockieren der zweiten Fördervorrichtung 18 beim Übergang von der ersten Fördervorrichtung 12 zur zweiten Fördervorrichtung 18 verhindert werden.

Dabei kann durch die Ausrichtungsvorrichtung die Ausrichtung der Objekte 16 erfolgen in Abhängigkeit von der Größe des Objekts 16, dem Gewicht des Objekts 16, der Geschwindigkeit des Objekts auf der ersten Fördervorrichtung 12 und/oder der Position des Objekts auf der ersten Fördervorrichtung. Hierdurch kann nicht nur eine optimale Ausrichtung des Objekts entlang der zweiten Förderrichtung 20 erreicht werden. Auch ein zu hartes Anschlagen an einer Seitenwand 19 der zweiten Fördervorrichtung kann vermieden werden durch eine geeignete Abbremsung bzw. Umlenken in Richtung der zweiten Förderrichtung 20. Gleichzeitig, insbesondere bei leichten Objekten, kann ein Liegenbleiben innerhalb der zweiten Fördervorrichtung 18 vermieden werden, welches insbesondere dann auftreten kann, wenn die zweite Fördervorrichtung 18 als Rutsche ausgebildet sind und es sich bei den Objekten um besonders leichte Objekte wie beispielsweise Packtüten handelt. Hierzu kann die Ausrichtungsvorrichtung 26 ausgebildet sein, die Objekte zu beschleunigen und so eine aktive Förderung insbesondere der leichten Objekte bereitzustellen.

In der Figur 1 ist eine Lichtschranke 32 dargestellt, die ein Objekt 16 erfasst, welches in die zweite Fördervorrichtung 18 abgeworfen wird. Sobald ein solches Objekt durch die Lichtschranke 32 erfasst wird, kann mittels der Ausrichtungsvorrichtung 26 eine Ausrichtung des Objekts erfolgen. Dabei ist die Lichtschranke 32 lediglich exemplarisch dargestellt. Weitere Sensoren oder alternative Sensoren können verwendet werden um das Vorhandensein eines Objekts, die Größe des Objekts, das Gewicht des Objekts, die Position und Ausrichtung des Objekts auf der ersten Fördervorrichtung und/oder der Geschwindigkeit des Objekts auf der ersten Fördervorrichtung zu bestimmen, um anhand der hierdurch bestimmten Parameter die Ausrichtungsvorrichtung 26 entsprechend anzusteuern. Hierbei kann es sich bei mindestens einem der Sensoren um einen optischen Sensor und insbesondere eine Kamera handeln.

Erfindungsgemäß weist die Ausrichtungsvorrichtung 26 einen ersten Abschnitt 28 und einen zweiten Abschnitt 30 auf. Dabei sind der erste Abschnitt 28 und der zweite Abschnitt 30 nebeneinander angeordnet. Insbesondere ist der erste Abschnitt 28 in Richtung der ersten Förderrichtung 14 hinter dem zweiten Abschnitt 30 angeordnet. Durch den ersten Abschnitt 28 und den zweiten Abschnitt 30 werden unterschiedliche Beschleunigungen/Bremswirkungen auf die Objekte aufgebracht, wodurch eine Ausrichtung der Objekte 16 erfolgen kann. Gleichzeitig kann ein Abbremsen und/oder Befördern/Beschleunigen des Objekts durch den ersten Abschnitt 28 und dem zweiten Abschnitt 30 der Ausrichtungsvorrichtung 26 erfolgen. Hierbei gilt insbesondere
- der erste Abschnitt weist eine erste Bremswirkung auf und der zweite Abschnitt weist eine zweite Beschleunigung auf;
- der erste Abschnitt weist eine erste Beschleunigung auf und der zweite Abschnitt weist eine zweite Beschleunigung auf, wobei die erste Beschleunigung größer ist als die zweite Beschleunigung; oder
- der erste Abschnitt weist eine erste Bremswirkung auf und der zweite Abschnitt weist eine zweite Bremswirkung auf, wobei die erste Bremswirkung kleiner ist als die zweite Bremswirkung.

Somit erfolgt ein Rotieren des Objekts 16 gemäß Pfeil 24 aufgrund der unterschiedlichen Beschleunigung/Abbremsung des Objekts und ein Rotieren des Objektes 23. Hierbei erfolgt die Bremswirkung bzw. die Beschleunigung des ersten Abschnitts 28 und/oder des zweiten Abschnitts 30 in Bewegungsrichtung/Förderrichtung der zweiten Fördervorrichtung 18 und nicht in Bewegungsrichtung/Förderrichtung der ersten Fördervorrichtung 12. Somit kommt es bei einer Ausbildung der zweiten Fördervorrichtung 18 als Rutsche zu einer Überlagerung der gravitativen Bewegung entlang der Rutsche und der Bremswirkung bzw. Beschleunigung des ersten Abschnitts 28 und/oder des zweiten Abschnitts 30 zur Ausrichtung bzw. Rotation des Objekts 16.

Insbesondere wird durch den ersten Abschnitt 28 und den zweiten Abschnitt 30 eine ebene und insbesondere gemeinsame Förderfläche gebildet, über die die Objekte 16 gefördert werden bzw. rutschen. Somit kann ein Objekt 16, welches über den ersten Abschnitt 28 und den zweiten Abschnitt 30 bewegt wird, möglichst vollflächig in Kontakt kommen mit dem ersten Abschnitt 28 und/oder dem zweiten Abschnitt 30, so dass die entsprechende Beschleunigung bzw. Bremswirkung des jeweiligen Abschnitts effektiv auf das Objekt 16 übertragen werden. Hierdurch wird auf einfache Weise eine gewünschte Rotation des Objekts 16 gemäß dem Pfeil 24 erreicht. Hierzu bewegt sich das Objekt 16 gleichzeitig über den ersten Abschnitt 28 und über den zweiten Abschnitt 30 und kommt mit diesen in Kontakt, so dass ein Teil des Objekts 16 die Beschleunigung bzw. Bremswirkung des ersten Abschnitts 28 erfährt und ein anderer Teil des Objekts 16 die Beschleunigung bzw. Bremswirkung des zweiten Abschnitts 30 erfährt. Hierdurch werden unterschiedliche Teile des Objekts 16 unterschiedlich beschleunigt/gebremst, was zu einer Rotation und Ausrichtung des Objektes führt.

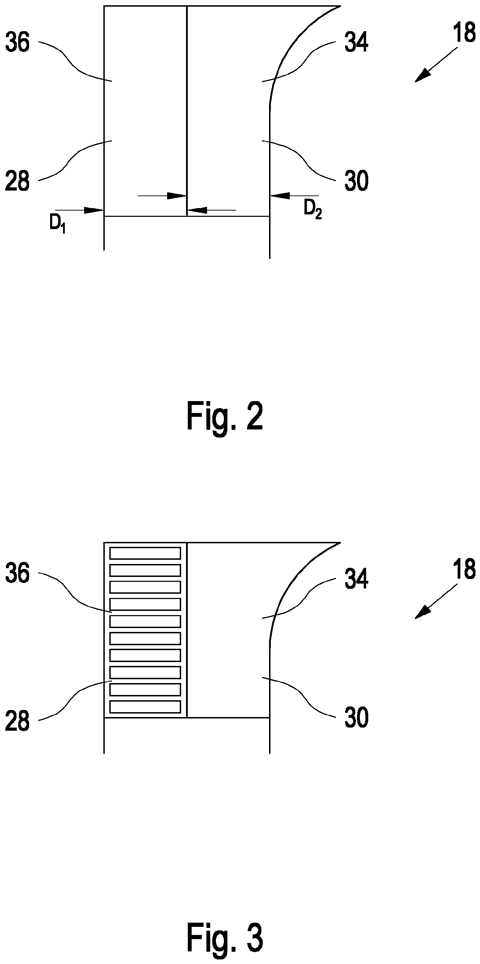

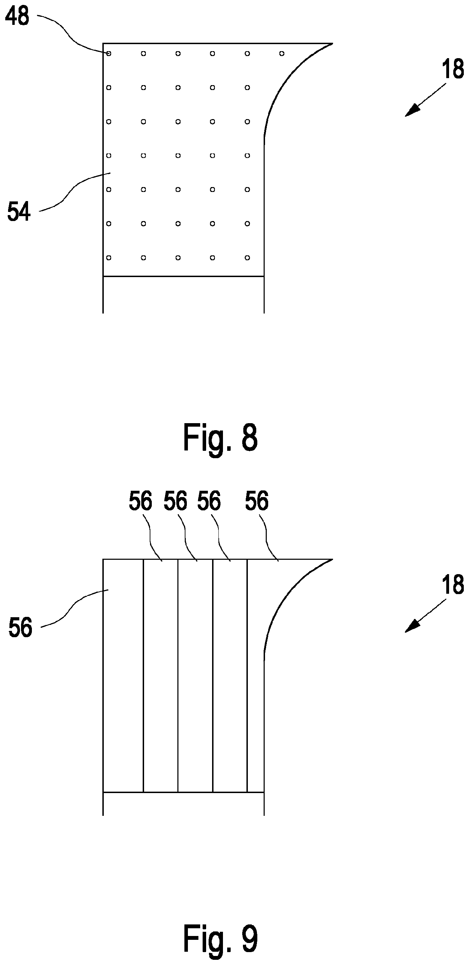

Nachfolgend werden unterschiedliche Ausführungsformen der vorliegenden Erfindung dargestellt. Dabei tragen gleiche oder ähnliche Bauteile dieselben Bezugszeichen. Insbesondere ist in den Figuren 2 bis 9 lediglich die zweite Fördervorrichtung 18 dargestellt. Weiterhin können, sofern technisch sinnvoll, die Ausführungsformen der Figuren 1 bis 9 untereinander kombiniert werden. So zeigt beispielsweise die Figur 9 eine Vielzahl von Abschnitten, welche frei mit den Ausführungsformen der Figuren 2 bis 8 kombiniert werden können. Weiterhin sind die zweiten Fördervorrichtungen 18 der Figuren 2 bis 9 stets kombiniert oder kombinierbar mit einer ersten Fördervorrichtung 12, gezeigt in der Figur 1.

Figur 2 zeigt eine zweite Fördervorrichtung 18 mit einem ersten Abschnitt 28 und einem zweiten Abschnitt 30. Dabei ist der erste Abschnitt 28 als erste Gleitfläche 36 und der zweite Abschnitt 30 als zweite Gleitfläche 34 ausgebildet. Dabei weisen die erste Gleitfläche 36 und die zweite Gleitfläche 34 unterschiedliche Reibkoeffizienten auf, sodass eine unterschiedliche Bremswirkung auf das Objekt wirkt, wenn dieses über die Gleitflächen des ersten Abschnitts 28 und des zweiten Abschnitts 30 rutschen. Aufgrund der unterschiedlichen Bremswirkungen erfolgt ein Ausrichten des Objekts. Die in Figur 2 dargestellte Ausführungsform hat den Vorteil, dass diese passiv ausgestaltet werden kann, ohne bewegliche Teile auskommt und somit einfach aufgebaut und wartungsarm ist. Hierbei kann beispielsweise der erste Abschnitt 28 eine geringere Reibung aufweisen als der zweite Abschnitt 30, sodass ein entsprechendes Ausrichten, wie in Figur 1 gezeigt ist, erreicht wird.

In Figur 3 ist eine zweite Fördervorrichtung 18 gezeigt. Dabei ist der zweite Abschnitt 30 ausgebildet als zweite Gleitfläche 34 wie in der Figur 2 beschrieben. Weiterhin ist der erste Abschnitt 28 ausgebildet als Rollenförderer 36 mit einer Vielzahl von Förderelementen. Dabei können die Förderelemente ausgebildet sein als Rollen bzw. Walzen, welche drehbar gelagert sind oder als Kugelelemente (ausgebildet beispielsweise als Röllchenförderer), welche ebenfalls drehbar gelagert sind. Dabei kann der Rollenförderer 36 aktiv sein, d. h. aktuiert / angesteuert sein, sodass die Förderelemente aktiv bewegt werden, um hierdurch eine Beschleunigung auf das Objekt 16 zu übertragen. Alternativ handelt es sich beim Rollenförderer 36 um einen passiven Rollenförderer, welcher nicht aktuiert wird bzw. keine angetriebenen Förderelemente aufweist. Hierbei kann der Rollenwiderstand des Rollenförderers 36 angepasst werden, um eine geeignete Bremswirkung auf das Objekt zu übertragen und insbesondere im Verhältnis zu dem zweiten Abschnitt 30 gewählte Bremswirkung zu erzeugen, um eine optimale Ausrichtung des Objekts zu erreichen. Hierbei kann der Rollenwiderstand der Rollen des Rollenförderers 36 angepasst werden beispielsweise durch ein Bremselement (basierend auf Reibung, ausgebildet als Wirbelstrombremse oder dergleichen) oder kann beispielsweise erzeugt werden durch eine Flüssigkeitsfüllung der einzelnen Rollenelemente. Weiterhin können die Oberflächen der Rollenelemente beispielsweise ausgebildet sein durch Metall, um eine erhöhte Haltbarkeit zu erreichen. Alternativ hierzu können die Oberflächen der Rollenelemente ausgebildet sein durch einen Kunststoff oder Gummi, um eine Bremswirkung auch in Richtung der ersten Förderrichtung 14 zu erreichen und somit ein ungewollt hartes Anschlagen an die Seitenwand 19 der zweiten Fördervorrichtung 18 zu vermeiden. Dabei kann die Beschleunigung bzw. Bremswirkung des Rollenförderers 36 gewählt anhand einer oder mehrerer der bereits vorher diskutierte Parameter wie beispielsweise Größe des Objekts, Gewicht des Objekts, Position des Objekts auf der ersten Fördervorrichtung und Geschwindigkeit des Objekts auf der ersten Fördervorrichtung. Hierdurch kann die Bremswirkung oder die Beschleunigung des Objekts im ersten Abschnitt 28 frei gewählt werden.

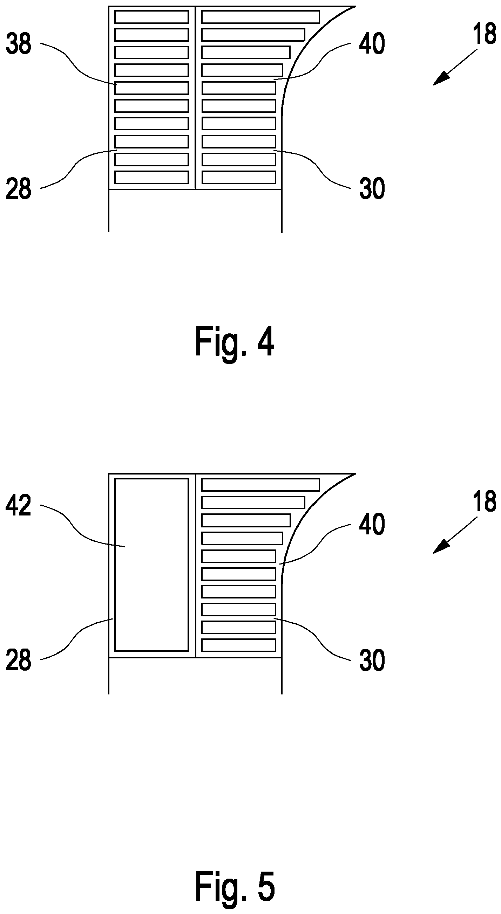

Figur 4 zeigt eine zweite Fördervorrichtung 18, wobei der erste Abschnitt ausgebildet ist als erster Rollenförderer 38 wie beschrieben in der Figur 3. Ebenso ist der zweite Abschnitt 30 ausgebildet als zweiter Rollenförde 40. Dieser kann ebenfalls ausgebildet sein wie vorstehend im Zusammenhang mit der Figur 3 beschrieben. Hierbei kann auch für den Rollenförderer 40 des zweiten Abschnitts die Beschleunigung bzw. Bremswirkung anhand einer oder mehrerer der bereits vorher diskutierte Parameter wie beispielsweise Größe des Objekts, Gewicht des Objekts, Position des Objekts auf der ersten Fördervorrichtung und Geschwindigkeit des Objekts auf der ersten Fördervorrichtung gewählt werden.

Figur 5 zeigt eine zweite Fördervorrichtung 18, wobei der zweite Abschnitt 30 als Rollenförderer 40 ausgebildet ist, wie im Zusammenhang mit den Figuren 3 und 4 beschrieben. Zusätzlich hierzu ist der erste Abschnitt 28 ausgebildet als Förderband 42. Durch das Förderband 42 erfolgt ein kontrolliertes Beschleunigen des Objekts zur Ausrichtung des Objekts durch die Ausrichtungsvorrichtung 26. Eine solche Beschleunigung erfolgt, sofern die Förderrichtung des Förderbands 42 in Richtung der zweiten Förderrichtung ist. Stattdessen kann die Förderrichtung des Förderbands 42 entgegen der zweiten Förderrichtung 20 sein, sodass eine effektive Abbremsung des Objekts erfolgt. Insbesondere kann die Beschleunigung bzw. Bremswirkung des Förderbands 42 und/oder des Rollenförderers 40 gewählt anhand einer oder mehrerer der bereits vorher diskutierte Parameter wie beispielsweise Größe des Objekts, Gewicht des Objekts, Position des Objekts auf der ersten Fördervorrichtung und Geschwindigkeit des Objekts auf der ersten Fördervorrichtung. Hierdurch kann die Bremswirkung oder die Beschleunigung des Objekts im ersten Abschnitt 28 und im zweiten Abschnitt 30 frei gewählt werden.

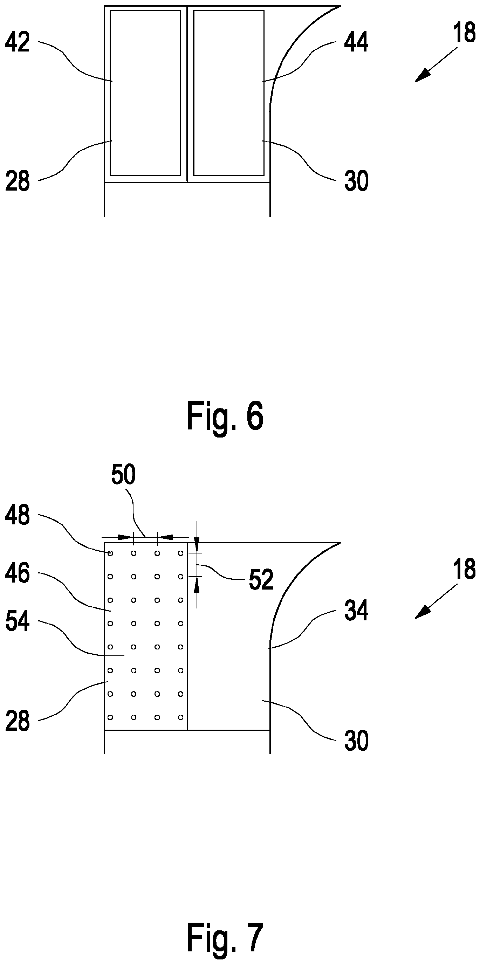

Figur 6 zeigt eine zweite Fördervorrichtung 18, wobei der erste Abschnitt 28 ausgebildet ist als Förderband 42, wie im Zusammenhang mit der Figur 5 beschrieben. Zusätzlich ist auch der zweite Abschnitt 30 ausgebildet als zweites Förderband 44, welches unabhängig von dem Förderband 42 des ersten Abschnitts 28 bewegbar ist. Insbesondere sind die Fördergeschwindigkeiten des ersten Förderbands 42 und des zweiten Förderbands 44 unterschiedlich. Insbesondere sind die Förderrichtungen des ersten Förderbands 42 und des zweiten Förderbands 44 entgegengesetzt, um eine Beschleunigung/Abbremsung des Objekts und somit eine Ausrichtung des Objekts 16 zu erreichen. Dabei können die Geschwindigkeiten eines oder beider Förderbänder 42, 44 gewählt anhand einer oder mehrerer der bereits vorher diskutierte Parameter wie beispielsweise Größe des Objekts, Gewicht des Objekts, Position des Objekts auf der ersten Fördervorrichtung und Geschwindigkeit des Objekts auf der ersten Fördervorrichtung. Hierdurch kann die Bremswirkung oder die Beschleunigung des Objekts im ersten Abschnitt 28 und/oder im zweiten Abschnitt 30 frei gewählt werden.

Figur 7 zeigt eine zweite Fördervorrichtung 18, wobei ein zweiter Abschnitt 30 ausgebildet ist als Gleitfläche 34, wie im Zusammenhang mit den Figuren 2 und 3 beschrieben. Zusätzlich hierzu ist der erste Abschnitt 28 ausgebildet als Aerofläche 46. Die Aerofläche 46 weist hierbei eine Vielzahl von Öffnungen/Düsen 48 auf. Diese weisen einen Abstand 50 auf in transversaler Richtung und einen Abstand 52 in longitudinaler Richtung. Dieser Abstand kann gleich oder unterschiedlich sein. Die Öffnung 48 kann dabei mit einem Überdruck beaufschlagt werden, sodass sich unter dem Objekt 16, wenn dieses über die Aerofläche 46 rutscht, ein Luftkissen bildet, wodurch die Reibung zwischen dem Objekt und der Aerofläche 46 reduziert wird. Alternativ hierzu sind die Öffnungen 48 mit einem Unterdruck beaufschlagt, sodass das Objekt 16 auf die Oberfläche der Aerofläche gedrückt wird, wodurch die Reibung zwischen dem Objekt und der Aerofläche 46 erhöht wird. Hierdurch erfolgt ein effektives Abbremsen. Insbesondere ist die Bremswirkung bei Anlegen eines Unterdrucks höher als bei Anlegen eines Überdrucks. Dabei kann eine Oberfläche 54 der Aerofläche 46 ausgebildet sein durch ein Material mit geringer Reibung. Alternativ hierzu kann die Oberfläche 54 der Aerofläche 46 ausgebildet sein durch ein Material mit hoher Reibung wie beispielsweise Gummi, wodurch die Bremswirkung bei einem Anlegen eines Unterdrucks an die Öffnungen 48 weiter erhöht wird. Insbesondere können die Öffnungen 48 als Düsen ausgebildet sein, welche in eine Förderrichtung weisen, wodurch aufgrund der Richtung der Düsen eine Beschleunigung auf das Objekt aufgebracht wird. Dabei kann der Überdruck und/oder Unterdruck gewählt anhand einer oder mehrerer der bereits vorher diskutierte Parameter wie beispielsweise Größe des Objekts, Gewicht des Objekts, Position des Objekts auf der ersten Fördervorrichtung und Geschwindigkeit des Objekts auf der ersten Fördervorrichtung. Hierdurch kann die Bremswirkung oder die Beschleunigung des Objekts im ersten Abschnitt 28 frei gewählt werden.

Figur 8 zeigt eine zweite Fördervorrichtung 18, wobei die Ausrichtungsvorrichtung 26 im ersten Abschnitt und im zweiten Abschnitt als Aerofläche 54 ausgebildet ist mit einer Vielzahl von Öffnungen 48. Dabei kann an Öffnungen 48" des ersten Abschnitts mit einem Unterdruck/Überdruck beaufschlagt werden. Unabhängig davon können Öffnungen 48" des zweiten Abschnitts mit einem Überdruck/Unterdruck beaufschlagt werden. Hierdurch kann eine abschnittweise Beschleunigung/Abbremsung des Objekts auf der Ausrichtungsvorrichtung 26 erreicht werden, wodurch eine optimale Ausrichtung des Objekts 16 erzielt wird.

Figur 9 zeigt eine zweite Fördervorrichtung 18 mit einer Vielzahl von Abschnitten 56. Dabei können die Abschnitte ausgebildet sein, wie vorstehend anhand der Figuren 2-8 beschrieben. Insbesondere werden durch die Abschnitte 56 jeweils unterschiedliche Beschleunigungen/Bremswirkungen erzeugt, sodass das Objekt optimal ausgerichtet wird und sich in die Bewegungsrichtung der zweiten Fördervorrichtung 18 eindreht.

Wie vorstehend bereits ausgeführt, können die einzelnen Ausführungsformen des ersten Abschnitts und/oder des zweiten Abschnitts frei miteinander kombiniert werden. Weiterhin können die unterschiedlichen Ausführungsformen der einzelnen Figuren und insbesondere der Figuren 1 und 9 zusammen mit den Figuren 2 - 8 frei miteinander kombiniert werden. Weiterhin ist es möglich, dass sich die Ausrichtungsvorrichtung 26 nicht über die gesamt Breite D der zweiten Fördervorrichtung 18 erstreckt, sondern lediglich einen Teil hiervon einnimmt. Auch wenn in den Figuren 1 - 9 gezeigt ist, dass sich die Ausrichtungsvorrichtung 26 unmittelbar am Beginn der zweiten Fördervorrichtung 18 ausgehend in Richtung der zweiten Förderrichtung 20 erstreckt, kann zunächst zwischen der ersten Fördervorrichtung 12 und der Ausrichtungsvorrichtung 26 ein Bereich vorgesehen sein, in welche das Objekt lediglich in Richtung der zweiten Förderrichtung 20 bewegt wird, ohne das bereits eine Ausrichtung erfolgt. Alternativ hierzu kann sich die Ausrichtungsvorrichtung 26 über die gesamte Länge der zweiten Fördervorrichtung 18 erstrecken oder an deren Ende angeordnet sein. Weiterhin ist zwar in den Figuren 1 - 8 gezeigt, dass der erste Abschnitt und der zweite Abschnitt im Wesentlichen gleichgroß sind und entlang der zweiten Förderrichtung 20 unverändert zueinander angeordnet sind. Hiervon kann abgewichen werden, sodass der erste Abschnitt, der zweite Abschnitt oder eine der Vielzahl von Abschnitten 56 unterschiedlich groß ausgebildet sein können. Weiterhin kann die Breite D1 (gezeigt in der Figur 2) und/oder die Breite D2 (gezeigt in der Figur 2) des jeweiligen ersten Abschnitts 28 bzw. zweiten Abschnitts 30 entlang der zweiten Fördervorrichtung 18 variieren, um eine optimale Ausrichtung zu erlangen.

Somit wird durch die vorliegende Erfindung eine Vorrichtung geschaffen, bei der eine Ausrichtung der zu fördernden Objekte erfolgt. Somit kann ein Verkanten der Objekte beim Übergang von der ersten Fördervorrichtung zur zweiten Fördervorrichtung vermieden werden. Gleichzeitig können die Objekte derart ausgerichtet werden, dass die zweite Fördervorrichtung kompakt ausgebildet werden kann, wodurch die Anzahl möglicher zweiter Fördervorrichtungen erhöht werden kann, um somit die Granularität der Sortierung durch die Vorrichtung ebenfalls zu erhöhen. Dies kann erfolgen auch für sehr unterschiedliche Objekte, welche insbesondere ein sehr unterschiedliches Gewicht und/oder sehr unterschiedliche Größen und Beschaffenheiten aufweisen. Hierdurch können Störungen der Vorrichtung vermieden werden. Gleichzeitig kann bei einer Berücksichtigung des Gewichts des Objektes eine entsprechende Abbremsung schwerer Objekte erfolgen. Hierdurch können Beschädigungen dieser schweren Objekte durch einen zu harten Aufprall vermieden werden. Leichte Objekte hingegen können beschleunigt werden, wodurch die Durchsatzrate an Objekten der Vorrichtung erhöht werden kann.

## Patentansprüche

1. Vorrichtung zum Ausrichten bzw. Rotieren von Objekten, mit
einer Fördervorrichtung, wobei die Fördervorrichtung einen Einlass zur Aufnahme der Objekte und einen Auslass aufweist und ausgebildet ist, die Objekte in eine Förderrichtung zu befördern, und
wobei die Fördervorrichtung eine Ausrichtungsvorrichtung aufweist, welche sich zumindest teilweise entlang der Förderrichtung erstreckt,
wobei die Ausrichtungsvorrichtung einen ersten Abschnitt und einen zweiten Abschnitt aufweist, wobei der erste Abschnitt und der zweite Abschnitt entlang der Förderrichtung nebeneinander angeordnet sind,
wobei mindestens einer von dem ersten Abschnitt und dem zweiten Abschnitt als Rollenförderer ausgebildet ist und wobei durch den ersten Abschnitt und den zweiten Abschnitt eine unterschiedliche Beschleunigung/Bremswirkung der Objekte zur Ausrichtung bzw. Rotation erfolgt.

2. Vorrichtung nach Anspruch 1, **dadurch gekennzeichnet, dass** die Ausrichtungsvorrichtung ausgebildet ist, die Objekte auszurichten während kontinuierlicher Bewegung der Objekte in die Förderrichtung.

3. Vorrichtung nach Anspruch 1 oder 2, **dadurch gekennzeichnet, dass** der Rollenförderer einen Antrieb aufweist zur Erzeugung der Beschleunigung/Bremswirkung.

4. Vorrichtung nach einem der Ansprüche 1 bis 3, **dadurch gekennzeichnet, dass** der Rollenförderer eine Bremsvorrichtung aufweist, wobei mittels der Bremsvorrichtung der Rollwiderstand des Rollenförderers veränderbar ist zur Erzeugung der Bremswirkung des Rollenförderers.

5. Vorrichtung nach Anspruch 4, **dadurch gekennzeichnet, dass** die Bremsvorrichtung ausgebildet ist, den Rollwiderstand des Rollenförderers durch das Gewicht von Förderelementen des Rollenförderers, Flüssigkeitsfüllung der Förderelemente oder ein Bremselement zu verändern.

6. Vorrichtung nach einem der Ansprüche 1 bis 5, **dadurch gekennzeichnet, dass** die Ausrichtungsvorrichtung ausgebildet ist, die Beschleunigung/Bremswirkung in Abhängigkeit von einem oder mehreren von der Größe des Objekts, von der Geschwindigkeit des Objekts insbesondere am Einlass der Fördervorrichtung und dem Gewicht des Objekts anzupassen.

7. Vorrichtung nach einem der Ansprüche 1 bis 6, **dadurch gekennzeichnet, dass** der erste Abschnitt und der zweite Abschnitt als Rollenförderer ausgebildet sind.

8. Vorrichtung nach einem der Ansprüche 1 bis 6, **dadurch gekennzeichnet, dass** der jeweils andere Abschnitt ausgebildet ist als Gleitfläche, Aerofläche oder Förderband.

9. Vorrichtung nach einem der Ansprüche 1 bis 8, **dadurch gekennzeichnet, dass** die Fördervorrichtung ausgebildet ist als Rutsche.

10. Vorrichtung nach einem der Ansprüche 1 bis 9, **dadurch gekennzeichnet, dass** das Objekt am Einlass der Fördervorrichtung eine Bewegungskomponente aufweist, welche im Wesentlichen senkrecht zur der Förderrichtung der Fördervorrichtung ist, wobei der Abschnitt höherer Beschleunigung/geringerer Bremswirkung entlang dieser Bewegungskomponente hinter dem anderen Abschnitt angeordnet ist.

11. Vorrichtung nach einem der Ansprüche 1 bis 10, **dadurch gekennzeichnet, dass** mehrere Abschnitte nebeneinander angeordnet sind, wobei mindestens ein Abschnitt als erster Abschnitt und zweiter Abschnitt ausgebildet sind.

12. Sorter zum Sortieren von Objekten, insbesondere Packstücken, mit einer ersten Fördervorrichtung und mindestens einer zweiten Fördervorrichtung, die von der ersten Fördervorrichtung abzweigt, wobei die mindestens eine zweite Fördervorrichtung ausgebildet ist gemäß der Vorrichtung nach einem der Ansprüche 1 bis 11.

13. Sorter nach Anspruch 12 mit einer Vielzahl von zweiten Fördervorrichtungen.
